(19)

Europäisches
Patentamt
European
Patent Office
Office européen
des brevets

(11) **EP 2 386 753 A1**

(12) **EUROPEAN PATENT APPLICATION**

(43) Date of publication:
**16.11.2011 Bulletin 2011/46**

(51) Int Cl.:
*F03D 9/00* (2006.01)    *H02P 9/00* (2006.01)
*H02P 9/30* (2006.01)    *H02P 9/48* (2006.01)

(21) Application number: **10382117.9**

(22) Date of filing: **12.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Wind To Power System, S.l.**
**28108 Madrid (ES)**

(72) Inventors:
• **Arnaltes Gómez, Santiago**
  **E-28108, Alcobendas - Madrid (ES)**

• **Santos Martin, David**
  **E-28108 Alcobendas - Madrid (ES)**
• **Rodriguez Amendo, Jose Luis**
  **E-28108 Alcobendas - Madrid (ES)**

(74) Representative: **ABG Patentes, S.L.**
  **Avenida de Burgos 16D**
  **Edificio Euromor**
  **28036 Madrid (ES)**

(54) **Excitation circuit for an asynchronous generator and method for the excitation of an asynchronous generator**

(57)    The invention relates to a system for the excitation of an asynchronous generator that can be connected to a turbine for generating electric power, in which the turbine is coupled to the rotor (13) which rotates in a stator (14) of the generator (11). The generation system consists of a direct current / alternating current inverter (16) connected to the rotor (13) of the generator and of an alternating current / direct current rectifier (17), which fixes the voltage in the capacitors (19) of the direct current link for the operation of the inverter. A controller (20) allows applying by means of the inverter a voltage to the rotor of the generator which is obtained by means of an optimization process minimizing the active and reactive power error for the purpose of directly controlling the active and reactive powers of the stator of the generator.

EP 2 386 753 A1

**Description**

Technical Field

The present invention relates to an excitation circuit for an asynchronous generator that can be connected to a turbine, such as a wind turbine, for generating electric power which is injected into an electric power grid, and to a method for the excitation of an asynchronous generator.

Background of the Invention

Generators connected to variable speed wind turbines are used today to produce electric power which reaches the end consumers through the three-phase electric power grid.

The simplest way to generate electric power from wind energy is by means of using a squirrel cage induction generator. Nevertheless, this generator has a series of drawbacks, such as the impossibility of controlling the reactive power and the fact that the operating speed is virtually constant, which requires a robust mechanical system of the wind generator for withstanding the loads transmitted by the wind.

For the purpose of solving this second drawback, rotor resistance insertion and a wound rotor induction generator is also used in wind generation. By means of rotor resistance insertion, it is possible to modify the mechanical characteristic of the generator such that greater variation of the rotational speed is obtained with the mechanical torque applied to the shaft by the wind turbine.

This method nevertheless has the drawback that part of power of the generator is dissipated in the rotor resistances. To solve this drawback, a system referred to as rotor power recovery is used, in which the power of the rotor is returned to the grid by means of a line-commutated inverter. Both types of generators can operate like a generator only at super-synchronous speeds and have an operation characteristic in a restricted range of speeds, but which is sufficient to dampen the mechanical loads transmitted by the wind. Nevertheless, both types of generators continue to present the drawback that the generator consumes reactive power in its operation.

There are also variable speed generators in which the generator can vary its operating speed in a broad range of speeds, from sub-synchronous speeds to super-synchronous speeds, such as the generator described in patent US 6,137,187, Mikhail et al. In this patent, the stator of the generator is directly connected to the electric power grid and the rotor thereof is in turn connected to the same grid through a first alternating current/direct current converter in turn connected, in cascade, to a second direct current/alternating current converter the output of which is connected to the three-phase alternating power grid, both converters being self-commutated inverters.

However, the asynchronous generator system with double supply described in the mentioned patent presents some drawbacks derived, for example, from the high cost of the connection of the rotor of the generator to the three-phase electric power grid through a double converter formed by two self-commutated inverters.

Likewise, the electromagnetic torque controller of the generator proposed in the mentioned patent, by means of an electromagnetic field oriented vector control solution of the stator does not assure continuity of the connection of the generator when in the grid there are voltage dips caused by electric faults or by other types of contingencies.

The electromagnetic torque controller of the generator by means of an electromagnetic field oriented vector control solution of the stator does not assure control of the currents of the rotor during these abrupt voltage drops, so it is necessary to protect the converter connected to the rotor either by disconnecting the generator from the grid, or else by means of a protection system, called crow-bar, which shunts the high rotor currents during the voltage disturbance to a resistor, the torque controller being inhibited during the disturbance.

Therefore, it is necessary to develop a generator that can be connected to a turbine for generating and supplying electric power to an electric power grid which prevents the problems described above.

Summary of the Invention

To solve the mentioned drawbacks, and particularly the inability of previous generators to regulate the reactive power, a new excitation circuit for asynchronous generators is proposed, the rotor circuit of which is fed by a controlled inverter, which allows regulating in a decoupled manner the active and reactive power of the generator according to the method which is also proposed in this application.

This and other objectives of the invention are achieved by means of an excitation circuit according to claim 1, a generator according to claim 10, a method according to claim 13, a computer program according to claim 16 and a computer-readable medium according to claim 18. The particular embodiments of the invention are defined in the dependent claims.

Thus, in a first inventive aspect, an excitation circuit for asynchronous generators, particularly for wind generators, is presented, comprising:

first electronic converting means for converting direct current into alternating current the output of which is connected to the rotor of an asynchronous generator,

second electronic converting means for converting alternating current into direct current the input of which is connected to an electric power grid, and

a direct current link wherein the input of the first electronic converting means is connected to the output of the second electronic converting means,

wherein the first converting means are a self-commutated inverter and the second converting means are an uncontrolled rectifier.

This excitation circuit for asynchronous generators reduces the cost of the power interface between the electric power grid and the rotor of the generator, upon substituting the first inverter, connected to the electric grid, with a simple rectifier. In parallel, the operating margin of the generator is reduced because it can only operate at sub-synchronous speeds.

Likewise, the excitation circuit of the invention assures the supply of electric power of the generator when voltage dips occur in the grid. A power controller based on a control solution, referred to as dynamic power programming, which allows a decoupled control of the active and reactive powers of the generator, even in the presence of severe voltage disturbances of the stator, due to the high dynamic features thereof, is used for such purpose.

In a second inventive aspect an asynchronous generator comprising an excitation circuit according to the first inventive aspect is presented.

In a third inventive aspect, a method for the excitation or control of an asynchronous generator is presented, comprising directly controlling the active and reactive powers of the stator injected into the electric grid by means of the voltage applied to the rotor of the generator, the voltage applied to the rotor being that which minimizes a cost function. In an embodiment of the invention, the voltage applied to the rotor is controlled with an excitation circuit according to the first inventive aspect.

A fourth aspect of the invention relates to a computer program comprising program code means for performing a method for the excitation or control of an asynchronous generator according to the third aspect of the invention, when said program is executed in a computer.

In one embodiment, the computer program is copied in a computer-readable medium.

A fifth aspect of the invention relates to a computer-readable medium containing a computer program comprising program code means for performing the method for the excitation or control of an asynchronous generator according to the third aspect of the invention, when said program is executed in a computer.

Brief Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

Figure 1 shows a block diagram of a wind generator according to the invention, and
Figure 2 shows a block diagram of the functions of the power controller of the generator according to the invention.

Description of a Preferred Embodiment

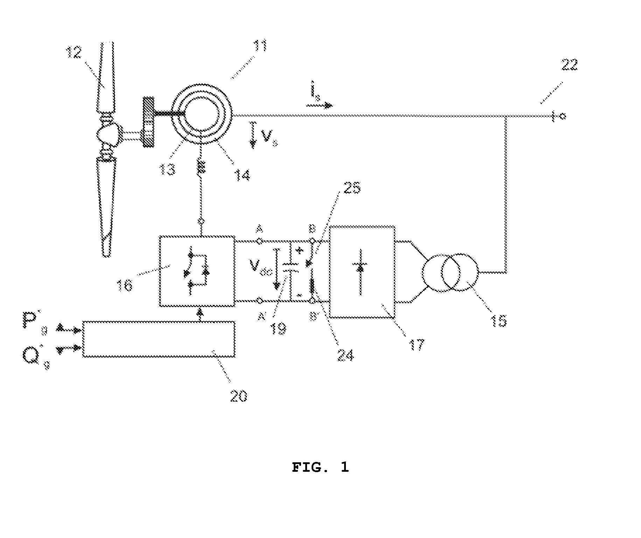

A block diagram of a doubly fed asynchronous or induction generator, together with the control means necessary for its correct operation, is described below with reference to Figure 1.

The wound rotor asynchronous generator (11) is connected to a turbine (12), such as a wind turbine, such that said turbine is coupled to the rotor (13) which rotates in a stator (14) of the generator (11).

The stator (14) is directly connected to an electric power grid (22).

The rotor (13) is connected to the excitation circuit of the invention, for which in a preferred embodiment, the mentioned rotor (13) is connected to an output of a first electric power converter (16) the input of which is connected in cascade by means of a direct current link or connection to an output of a second electric power converter (17), which has an input connected to an electric power grid (22).

In a preferred embodiment of the invention, the first electric power converter (16) is a self-commutated inverter and the second electric power converter (17) is an uncontrolled rectifier.

In an embodiment variant, the input of the second electric power converter (17) is connected to the grid (22) by means of a transformer (15).

Advantageously, in the direct current link there is connected a capacitor (19) which is charged at a certain voltage level by means of the second electric power converter (17). In the direct current link there is also connected a resistor (24) controlled by a switch (25) for assuring that the maximum voltage level of the direct current link is not exceeded in certain operating modes.

Therefore, the operating mode of the excitation circuit takes place as follows. The second electric power converter (17) transforms an alternating current of the grid (22) into direct current, and subsequently, the first electric power converter (16) in turn transforms the direct current coming from the direct current link into a variable frequency alternating current, for feeding the rotor (13) of the generator (11).

The first electric power converter (16) comprises a set of switching elements such that each of them has a control terminal through which an on and/or off signal is applied to them.

A controller module (20) generates and supplies the mentioned switching signals and for carrying out said tasks, the controller module (20) calculates and/or receives a signal proportional to the current of the stator $\mathbf{i_s}$ and a signal proportional to the voltage of the stator $\mathbf{u_s}$, for controlling the active, $\mathbf{P_s}$, and reactive, $\mathbf{Q_s}$, powers injected by the stator (14) into the grid (22).

The controller module (20) comprises a microprocessor storing a control algorithm, referred to as dynamic power programming, with which it directly regulates the active and reactive powers injected by the stator (14) into the electric grid (22).

Accordingly, the controller module (20) controls the first electric power converter (16), such that it controls the active and reactive powers generated by the stator (14) of the generator (11).

In an embodiment variant, the controller module (20) controls the switching element (25) of the direct current link.

In addition, the second electric power converter (17) comprises a set of uncontrolled switching elements, typically diodes, the switching of the elements being performed passively according to the polarity of the voltage in the terminals thereof.

The second converter (17) regulates the voltage applied to the capacitor (19) of the direct current link in a passive manner, being maintained at a predetermined value $\mathbf{V_{dc}}$ from the voltage level of the electric grid (22).

Accordingly, the second electric power converter (17) does not require a controller for controlling the voltage of the direct current link $\mathbf{V_{dc}}$ in the capacitor (19).

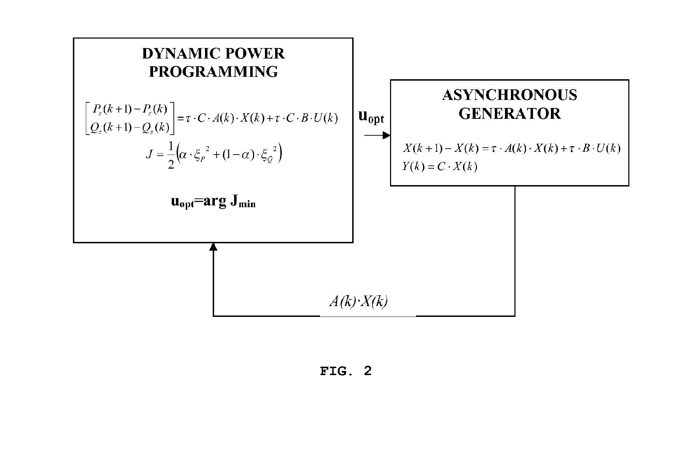

Figure 2 shows a block diagram of the process referred to as dynamic power programming, which allows directly controlling the active and reactive powers injected by the stator (14) of the generator (11) into the electric grid (22).

It is known in the state of the art that it is possible to control the active and reactive powers of the stator by means of the suitable application of a rotor voltage. The dynamic power programming is based on the optimal selection of a rotor voltage vector which in each sampling instant minimizes a cost function:

$$J = \frac{1}{2}\left( \alpha \cdot \xi_P{}^2 + (1-\alpha) \cdot \xi_Q{}^2 \right)$$

Where $\xi_P$ and $\xi_Q$ are the active and reactive power errors, respectively, and $\alpha$ is a factor which allows weighting between minimizing the active power error or the reactive power error.

The method for controlling the voltage applied to the rotor is advantageously performed with an excitation circuit like the one described above.

To evaluate the cost function it is necessary to estimate the power error resulting from the application of each of the eight possible rotor voltage vectors by means of a three-phase inverter. The power error is obtained by means of the expression:

$$\begin{bmatrix} P_s(k+1) - P_s(k) \\ Q_s(k+1) - Q_s(k) \end{bmatrix} = \tau \cdot C \cdot A(k) \cdot X(k) + \tau \cdot C \cdot B \cdot U(k)$$

Where the terms of the expression are obtained from the state equation of the doubly fed asynchronous generator in discrete time:

$$X(k+1) - X(k) = \tau \cdot A(k) \cdot X(k) + \tau \cdot B \cdot U(k)$$
$$Y(k) = C \cdot X(k)$$

Where k is the sampling instant, $\tau$ is the sampling period, $X=[i_{sd},i_{sq},i_{rd},i_{rq}]^T$ is the state vector, $U=[u_{sd},u_{sq},u_{rd},u_{rq}]^T$ is the input voltage vector and $Y=[P_s \ Q_s]^T$ is the output vector (active and reactive powers of the stator).

The rotor voltage vector selected for its application to the rotor of the generator by the inverter in each sampling instant is that which minimizes the cost function.

The method furthermore allows dividing the path of the output vector between two sampling instants in a series of stages. In this case, between every two sampling instants, a succession of rotor voltage vectors will be obtained which minimize the sum of the values of the cost function in each stage. Thus, by introducing the application time of the rotor voltage vector in each stage as a variable, it is possible to obtain a pattern of rotor voltage vectors which involves an operation of the inverter at a constant switching frequency.

Likewise, it must be observed that the present invention can be implemented in a variety of computers including microprocessors, a computer-readable storage medium, including volatile and non-volatile memory elements and/or storage elements. The logic of the computing hardware cooperating with various sets of instructions is applied to the data to perform the functions described above and to generate output information. The programs used by the computing hardware taken as an example can preferably be implemented in various programming languages, including a high-level programming language aimed at processes or objects for communicating with a computer system. Each computer program is preferably stored in a storage medium or device (for example, ROM or magnetic disk) which can be read by a programmable general-purpose or special-purpose computer to configure and operate the computer when the storage medium or device is read by the computer for the purpose of executing the processes described above. Likewise, it can be considered that the controller is implemented as a computer-readable storage medium, configured with a computer program, in which the storage medium thus configured makes a computer work in a specific and predefined manner.

The embodiments and examples established in this specification are presented as the best explanation of the present invention and the practical application thereof and to thus allow the persons skilled in the art to use the invention. Nevertheless, the persons skilled in the art will recognize that the description and the previous examples have been presented for the purpose of illustrating only one example. The description, as set forth, is not intended to be exhaustive or to limit the invention to the precise manner described. Many modifications and variations are possible in view of the previous teaching without departing from the essence and scope of the following claims.

**Claims**

1. An excitation circuit for asynchronous generators, particularly for wind generators, comprising
   first electronic converting means (16) for converting direct current into alternating current the output of which is connected to the rotor (13) of an asynchronous generator,
   second electronic converting means (17) for converting alternating current into direct current the input of which is connected to an electric power grid (22), and
   a direct current link wherein the input of the first electronic converting means (16) is connected to the output of the second electronic converting means (17),
   wherein the first converting means (16) are a self-commutated inverter and the second converting means (17) are an uncontrolled rectifier.

2. The excitation circuit according to claim 1, **characterized in that** the first converting means (16) comprise a set of switching elements having a terminal through which an on and/or off control signal, respectively, is applied to them.

3. The excitation circuit according to claim 1, **characterized in that** the second converting means (17) comprise a set of uncontrolled switching elements.

4. The excitation circuit according to any of the previous claims, **characterized in that** it comprises a transformer (15) connected between the electric grid (22) and the input of the second converting means (17).

5. The excitation circuit according to any of the previous claims, **characterized in that** the direct current link comprises a capacitor (19) which is charged and maintains the voltage of the direct current link at a fixed value.

6. The excitation circuit according to any of the previous claims, **characterized in that** the direct current link comprises a resistor (24) and a switching element (25) for controlling the maximum voltage level of the direct current link.

7. The excitation circuit according to any of the previous claims, **characterized in that** it comprises a controller module (20) generating the on and/or off signals of the switching elements of the first converting means (16) for controlling the active and reactive powers injected by the stator (14) of the generator into the electric grid (22).

8. The excitation circuit according to claims 6 and 7, **characterized in that** the switching element (25) of the direct current link is controlled by the controller module (20).

9. The excitation circuit according to claim 7, **characterized in that** the controller module (20) calculates and/or determines a signal proportional to the current of the stator and a signal proportional to the voltage of the stator for performing the control of the active and reactive powers injected by the stator (14) of the generator into the electric grid (22).

10. An asynchronous generator (11) comprising an excitation circuit according to any of claims 1 to 9.

11. The generator according to claim 10, **characterized in that** it is connected to a turbine (12).

12. The generator according to claim 11, **characterized in that** the turbine (12) is a wind turbine.

13. A method for the excitation of an asynchronous generator which comprises directly controlling the active and reactive powers of the stator (14) injected into the electric grid (22) by means of the voltage applied to the rotor (13) of the generator (11), the voltage applied to the rotor being that which minimizes a cost function.

14. The method for excitation according to claim 13, **characterized in that** the cost function is evaluated by means of an estimator of the active and reactive power error.

15. The method for the excitation of an asynchronous generator according to claims 13 or 14, **characterized in that** the voltage applied to the rotor (13) is controlled with an excitation circuit according to at least any one of claims 1 to 9.

16. A computer program, **characterized in that** it comprises program code means for performing the method for the excitation of an asynchronous generator according to any one of claims 13, 14 or 15, when said program is executed in a computer.

17. The computer program according to claim 16, **characterized in that** it is copied in a computer-readable medium.

18. A computer-readable medium, **characterized in that** it contains a computer program comprising program code means for performing a method for the excitation of an asynchronous generator according to any of claims 13, 14 or 15, when said program is executed in a computer.

FIG. 1

**DYNAMIC POWER PROGRAMMING**

$$\begin{bmatrix} P_s(k+1) - P_s(k) \\ Q_s(k+1) - Q_s(k) \end{bmatrix} = \tau \cdot C \cdot A(k) \cdot X(k) + \tau \cdot C \cdot B \cdot U(k)$$

$$J = \frac{1}{2}\left(\alpha \cdot \xi_P^{\,2} + (1-\alpha) \cdot \xi_Q^{\,2}\right)$$

**u$_{opt}$=arg J$_{min}$**

**u$_{opt}$**

**ASYNCHRONOUS GENERATOR**

$$X(k+1) - X(k) = \tau \cdot A(k) \cdot X(k) + \tau \cdot B \cdot U(k)$$
$$Y(k) = C \cdot X(k)$$

$A(k) \cdot X(k)$

FIG. 2

Europäisches
Patentamt

European
Patent Office

Office européen
des brevets

## EUROPEAN SEARCH REPORT

**Application Number**

EP 10 38 2117

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/150285 A1 (CORCELLES PEREIRA JOSE MANUEL [ES] ET AL) 26 June 2008 (2008-06-26) * page 3, paragraph 31 - page 4, paragraph 46; figures 1-6 * | 1-12 | INV. F03D9/00 H02P9/00 H02P9/30 H02P9/48 |
| Y | US 2006/214428 A1 (ALTEMARK JENS [DE] ET AL ALTEMARK JENS [DE] ET AL) 28 September 2006 (2006-09-28) * page 5, paragraph 78 - page 6, paragraph 82; figure 1 * * page 7, paragraph 97 - paragraph 109 * | 1-12 | |
| Y | US 2007/052244 A1 (HUDSON RAYMOND M [US]) 8 March 2007 (2007-03-08) * page 2, paragraph 25 - page 3, paragraph 43; figures 1,2,2A * | 6-9 | |

TECHNICAL FIELDS
SEARCHED      (IPC)

F03D
H02P

The present search report has been drawn up for all claims

| Place of search | Date of completion of the search | Examiner |
|---|---|---|
| Munich | 20 December 2010 | Hascher, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 38 2117

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2010

| Patent document cited in search report | | Publication date | Patent family member(s) | | Publication date |
|---|---|---|---|---|---|
| US 2008150285 | A1 | 26-06-2008 | EP<br>WO | 2123908 A1<br>2008077974 A1 | 25-11-2009<br>03-07-2008 |
| US 2006214428 | A1 | 28-09-2006 | DE<br>EP<br>WO | 10327344 A1<br>1634365 A2<br>2004114493 A2 | 27-01-2005<br>15-03-2006<br>29-12-2004 |
| US 2007052244 | A1 | 08-03-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6137187 A, Mikhail